# EUROPEAN PATENT SPECIFICATION

(11) **EP 2 552 533 B1**
(45) Date of publication and mention of the grant of the patent: **14.12.2016**
(21) Application number: 11716477.2
(22) Date of filing: 01.04.2011
(51) Int. Cl.: A61M 39/02, G01N 1/20, G01N 35/10, G01N 1/10, B01L 3/00

(54) **DEVICE FOR TAKING A SAMPLE OF LIQUID CONTAINED IN A FLEXIBLE BAG**
VORRICHTUNG ZUR PROBENNAHME AUS EINER FLÜSSIGKEIT IN EINEM FLEXIBLEN BEUTEL
DISPOSITIF DE PRÉLÈVEMENT D'ÉCHANTILLON DE LIQUIDE DANS UNE POCHE SOUPLE

(30) Priority: 01.04.2010 FR 1001376
(43) Date of publication of application: 06.02.2013
(73) Proprietor: B. Braun Medical SAS, 92107 Boulogne-Billancourt Cedex (FR)
(72) Inventor: BORDEAU, Jérôme, F-61110 Le Condeau (FR); COLLIN, Rémi, F-61340 Saint-Hilaire-sur-Erre (FR); PREZELIN, Anthony, F-28400 Nogent-le-Rotrou (FR)
(74) Representative: Mahler, Peter
(86) International application number: PCT/EP2011/001648
(87) International publication number: WO 2011/120710

(56) References cited:
- FR-A1- 2 881 872
- US-A- 4 723 944
- US-A1- 2007 227 270
- US-A1- 2007 260 195
- US-B1- 6 293 163

## Description

The invention relates to the field of medical and/or biological analyses. More precisely, the invention relates to taking a sample of liquid contained in a flexible closed container, for example, a bag for collecting urine or blood.

In order to analyse a liquid of this type, for example, in order to carry out a cytobacteriological urine test, it is first of all necessary to collect a urine sample in such a way that the sample is not contaminated by the collection procedure. When the urine, or more generally, the liquid to be analysed, is contained in a closed collection bag which does not have a drain line allowing simple collection of a sample in the required aseptic conditions, it is theoretically possible to take a sample with a syringe equipped with a needle. After decontaminating an appropriate area of the surface of the bag, e.g. with alcohol swabs, the needle of the syringe is used to pierce through the wall of the bag and to pump out the required quantity of urine.

However, this operating method contains a risk of accidental pricking with the needle of the syringe, a risk which is all the more serious as the urine or blood can be contaminated and thus the needle can contaminate the operator. Furthermore, by puncturing the wall of the bag with the needle of the syringe, it would be easy to go through the second wall of the bag instead of stopping inside the bag to pump out a urine sample, which would not only contaminate the urine sample, but also cause urine leaks.

Documents FR2881872 and US2007227270 disclose relevant prior art.

The object of the invention is to provide medical personnel with a device which allows easy collection of a sample of urine, blood or any other liquid contained in a flexible and closed container, and which is not potentially traumatic, as is the case of the needle of a syringe, and without resorting to complicated and costly material.

A non-traumatic object would be, for example, the nozzle of a syringe without a needle. However, without a needle, the nozzle of a syringe no longer permits piercing of the wall of the container and accessing the liquid which is to be sampled.

The problem to be resolved relates to piercing the wall of the container with a non-cutting piece, whilst obtaining a precise and clean opening for accessing the liquid and preventing any unintended flow or spill of liquid.

The problem is solved according to the present invention by a device for taking a sample of liquid contained in a flexible bag, which is characterised in that the device comprises a first section having a base surface and a film perforating element protruding from the base surface. The device according to the invention further comprises a second section having a base surface surrounding a cavity, which is adapted for receiving the film perforating element of the first section. The first section has an adhesive surface surrounding the film perforating element, and the second section has an adhesive surface surrounding the cavity. Furthermore, one of the two sections comprises an opening in the base surface, inside of the adhesive surface.

Access to a flexible bag for receiving liquids, particularly a urine or blood bag, can be established with a device of this type. For this purpose, the bag is placed between the two sections of the device. The two sections are oriented one towards the other, in such a way that the film perforating element in the first section is oriented towards the cavity of the second section. The two sections are then moved towards each other. The bonding of one wall of the bag with the second section of the device is first of all obtained by the adhesive surface of the second section, and the film of the bag is kept tightly over the cavity of the second section due to the bonding. The film of the other wall is overlying, and the film perforating element perforates the two walls during penetration into the cavity of the second section. An adhesive connection is also established during contact of the adhesive surface situated on the base surface of the first section of the device with the adjacent wall of the bag. The adhesive surfaces of the two sections of the device seal the perforated bag. Access to the contents of the bag is obtained due to the opening in one of the two sections.

Access for taking a sample of a liquid inside any flexible bag can be created in a simple and secure way with the device according to the invention. The device can also be used to empty the bag of liquid in a quick, efficient and clean way, for example, in order to separately dispose of the contents of the bag and the bag itself. The opening arranged in one of the sections of the device must be chosen with a corresponding size.

The adhesive surfaces are preferably made in the form of a ring, and in particular, with equal dimensions for both sections. A secure adhesion, and thus a secure sealing, can therefore be obtained by pressing one section on top of the other.

Cleaning the surface of the bag in the region to be perforated, for example, by using alcohol, is advised for the sterile sampling of liquid as well as for secure bonding of the surface of the bag with the adhesive surfaces.

In one embodiment of the invention, the opening can be provided in the first section, and the film perforating element can be a tubing arranged around the opening. The tubing can then preferably have a bevelled tip. In this way, the film is perforated in a secure way, and the opening made in the bag coincides with the opening of the first section of the device, in such a way that the liquid can be collected without hindrance.

In a preferred improvement of the invention, the film perforating element can be slid in the first section between a first position, in which it does not - or not substantially - protrude from the base surface of the first section, and a section position, in which it clearly protrudes from the base surface. This allows to adhesively fix the device to the bag in a secure way, with the film perforating element in the first position. The film perforating element is slid into the second position only after bonding, and thus sealing of the area of the bag to be perforated. Then the bag is perforated and access is established. It is also possible to connect a syringe or tubing to the device before perforation, or the opening can be provided with a closure to prevent a flow of liquid.

A corresponding connection, in particular, a female Luer connector, can be arranged on the section of the device which is provided with the opening, on the side opposite the adhesive surface, for the connection of ducts or syringes.

Advantageously, the opening in one of the two sections can be closed by a perforable or resealable membrane in order to ensure sealing during positioning of the device, or for allowing repeated sampling of liquid.

The two sections can preferably be joined together in an articulated manner.

A preferred embodiment of the invention is explained in more detail by means of the attached drawings:
- **Figure 1**: shows a preferred embodiment of the device according to the present invention in a perspective view;
- **Figure 2**: shows the embodiment of Figure 1, in a side view, before establishing access to a bag of liquid;
- **Figure 3**: shows the embodiment of Figures 1 and 2, in cross section, during the establishment of access to a bag of liquid;
- **Figure 4**: shows the embodiment of Figure 3, with access established to a bag of liquid.

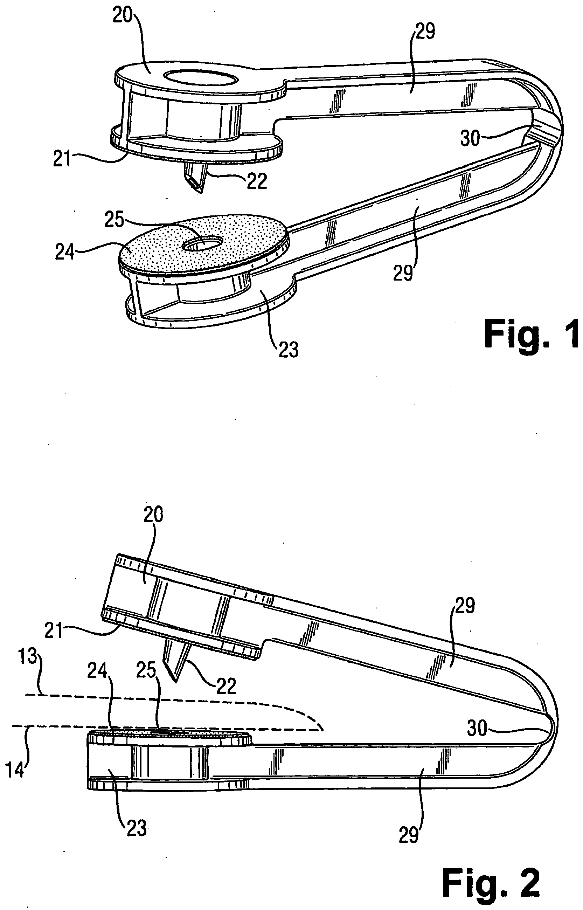

A preferred embodiment of the device according to the invention is shown in a perspective view in **Figure 1**. The device comprises a first section **20** and a second section **23** which are linked together in an articulated manner. For this purpose, the two sections **20, 23** are each connected to an arm **29**. The two arms **29** form an articulation **30** at their other extremities. The two sections **20, 23** of the device each have a circular base surface of an identical size, which are each provided with an adhesive circular surface **21, 24**. The two sections **20, 23** are linked together by the arms **29** and the articulation **30**, in such a way that the adhesive surfaces face each other.

A cavity **25** is arranged in the second section **23** of the device inside of the adhesive circular surface **24**. The first section **20** of the device has an opening **26** crossing the base surface inside of the adhesive surface **21**. A tubing **22** with a bevelled extremity, which protrudes from the base surface **21** of the first section, is arranged around this opening **26**. The cavity **25** of the second section **23** has dimensions which allow it to receive the tubing **22**.

The device of **Figure 1** is shown in a side view in **Figure 2**. The way in which a flexible bag of liquid **13**, **14** is positioned between the two sections **20**, **23** of the device is shown here. The external sides of the walls of the bag are preferably disinfected in the area of perforation. The lower wall **14** of the bag can be adhesively fixed as shown on the adhesive surface **24** of the second section **23** before fixation of the upper wall on the adhesive surface **21**.

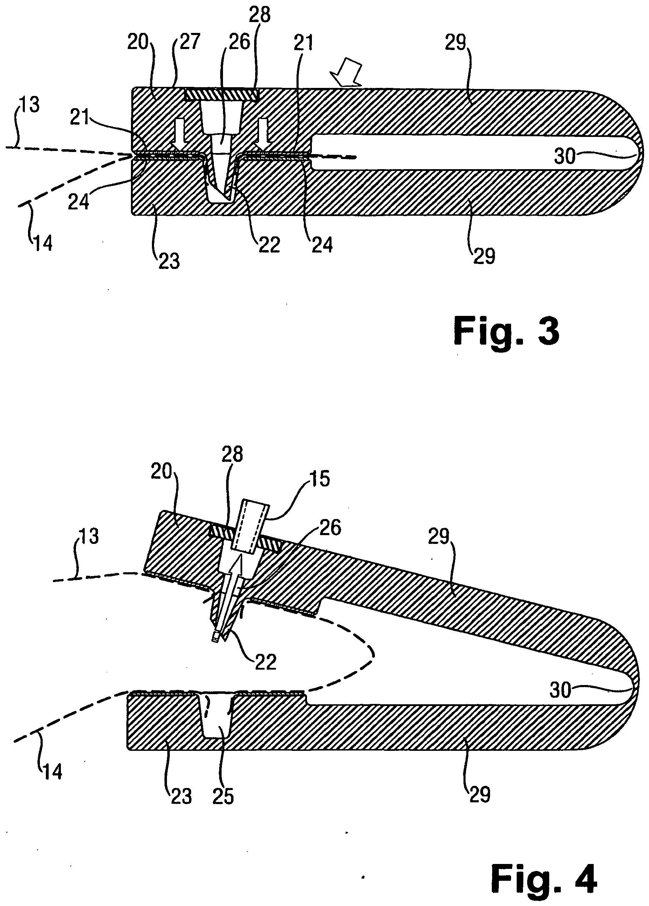

The way in which the bag **13, 14** is perforated, and how access is created can be seen in the sectional representation in **Figure 3**. For this purpose, the two sections **20, 23** of the device are moved towards each other around the articulation **30**. At this stage, the films **13, 14** of the bag are pressed one on top of the other by the tubing **22**. The liquid in the bag is pushed back from this region. The lower film **14** is fixed to the adhesive surface **24** of the second section **23** of the device and thus cannot be pushed into the cavity **25**. The two films **13**, **14** are perforated by the bevelled point of the tubing **22** in the case of additional movement of the first section **20** in the direction of the second section **23**. The cavity **25** receives the tubing **22**. The adhesive surfaces **21**, **24** with equal dimensions are pushed onto the walls of the bag **13, 14**. Since the two sections **20, 23** of the device remain in contact, as shown in this figure, no liquid can leave the bag. The first section **21** of the device contains a usual female Luer connector **28** for a syringe on the side **27** facing the adhesive surface **21**, which connector corresponds to the opening **26** and can be closed with a closure cap, or linked to a syringe or a duct.

The same device is shown in an open state in **Figure 4**. The two sections **20**, **23** are no longer in contact with one another. The male Luer connector **15** of a common syringe is connected to the connector **28**. Liquid can be taken through the tubing **22**. Bonding of the walls **13, 14** of the bag with the adhesive surfaces **21, 24** seals the bag around the perforated areas and simultaneously prevents further tearing of the walls.

## Claims

1. Device for taking a sample of liquid from a flexible bag (13, 14), **characterised in that** the device comprises a first section (20) which has a base surface (21) and a film perforating element (22) which protrudes from the base surface (21), and a second section (23) which has a base surface (24) surrounding a cavity (25) which is adapted for receiving the film perforating element (22) of the first section (20), the first section (20) has an adhesive surface surrounding the film perforating element (22), and the second section (23) has an adhesive surface surrounding the cavity (25), and **in that** one of the sections (20, 23) has an opening (26) in the base surface inside of the adhesive surface (21, 24).

2. Device according to claim 1, **characterised in that** the adhesive surfaces (21, 24) are made in the form of a ring.

3. Device according to claim 1 or 2, **characterised in that** the adhesive surfaces (21, 24) essentially have the same dimensions.

4. Device according to any one of claims 1 to 3, **characterised in that** the opening (26) is arranged in the first section, and the element for perforating film is a tubing (22) arranged around the opening (26).

5. Device according to any one of claims 1 to 4, **characterised in that** the film perforating element (22) can be slid in the first section (20) between a first position, in which it does not protrude, or does not substantially protrude, from the base surface (21), and a second position, in which it clearly protrudes from the base surface (21).

6. Device according to any one of claims 1 to 5, **characterised in that** a connector (28) for a duct or a syringe, particularly a female Luer connector, is arranged on the section (20) of the device having the opening (26) on the side (17) facing the adhesive surface (21).

7. Device according to any one of claims 1 to 6, **characterised in that** the opening arranged in one of the two sections of the device is closed by a perforable or resealable membrane.

8. Device according to any one of claims 1 to 7, **characterised in that** the two sections (20, 23) of the device are connected to each other in an articulated manner.

## Patentansprüche

1. Vorrichtung zur Entnahme einer Flüssigkeitsprobe aus einem flexiblen Beutel (13, 14), **dadurch gekennzeichnet, dass** die Vorrichtung ein erstes Teil (20) umfasst, das über eine Grundfläche (21) und ein aus der Grundfläche (21) herausstehendes folienperforierendes Element (22) verfügt, und ein zweites Teil (23) umfasst, das über eine Grundfläche (24) verfügt, die eine Vertiefung (25) umschließt, die geeignet ist, das folienperforierende Element (22) des ersten Teils (20) aufzunehmen, und das erste Teil (20) eine Klebefläche aufweist, die das folienperforierende Element (22) umschließt, und der zweite Teil (23) eine Klebefläche aufweist, die die Vertiefung (25) umschließt, und wobei eines der Teile (20, 23) eine Öffnung (26) in der Grundfläche innerhalb der Klebefläche (21, 24) aufweist. \

2. Vorrichtung nach Anspruch 1, **dadurch gekennzeichnet, dass** die Klebeflächen (21, 24) ringförmig ausgebildet sind.

3. Vorrichtung nach Anspruch 1 oder 2, **dadurch gekennzeichnet, dass** die Klebeflächen (21, 24) im Wesentlichen dieselbe Dimension aufweisen.

4. Vorrichtung nach einem der Ansprüche 1 bis 3, **dadurch gekennzeichnet, dass** die Öffnung (26) im ersten Teil angeordnet ist und das folienperforierende Element ein um die Öffnung (26) herum angeordneter Stutzen (22) ist.

5. Vorrichtung nach einem der Ansprüche 1 bis 4, **dadurch gekennzeichnet, dass** das folienperforierende Element (22) im ersten Teil (20) zwischen einer ersten Position, in der es nicht oder nicht wesentlich aus der Grundfläche (21) heraussteht, und einer zweiten Position, in der es spürbar aus der Grundfläche (21) heraussteht, verschiebbar ist.

6. Vorrichtung nach einem der Ansprüche 1 bis 5, **dadurch gekennzeichnet, dass** an dem Teil (20) der Vorrichtung mit der Öffnung (26) auf der der Klebefläche (21) abgewandten Seite (17) ein Anschluss (28) für eine Leitung oder eine Kanüle, insbesondere ein weiblicher Luer-Verbinder, angeordnet ist.

7. Vorrichtung nach einem der Ansprüche 1 bis 6, **dadurch gekennzeichnet, dass** die in einem der beiden Teile der Vorrichtung angeordnete Öffnung von einer perforierbaren oder wiederverschließbaren Membran verschlossen ist.

8. Vorrichtung nach einem der Ansprüche 1 bis 7, **dadurch gekennzeichnet, dass** die beiden Teile (20, 23) der Vorrichtung gelenkig miteinander verbunden sind.

## Revendications

1. Dispositif de prélèvement d'un échantillon de liquide d'une poche souple (13, 14), **caractérisé en ce que** le dispositif comprend une première partie (20) qui dispose d'une surface de base (21) et d'un élément de perforation de film (22) dépassant de la surface de base (21), et une seconde partie (23) qui dispose d'une surface de base (24) entourant une cavité (25) qui est adaptée à recevoir l'élément de perforation de film (22) de la première partie (20), la première partie (20) présentant une surface adhésive entourant l'élément de perforation de film (22) et la seconde partie (23) présentant une surface adhésive entourant la cavité (25) ; et **en ce qu'**une des parties (20, 23) présente une ouverture (26) dans la surface de base à l'intérieur de la surface adhésive (21, 24).

2. Dispositif selon la revendication 1, **caractérisé en ce que** les surfaces adhésives (21, 24) sont réalisées en forme d'anneau.

3. Dispositif selon la revendication 1 ou 2, **caractérisé en ce que** les surfaces adhésives (21, 24) présentent essentiellement la même dimension.

4. Dispositif selon l'une quelconque des revendications 1 à 3, **caractérisé en ce que** l'ouverture (26) est disposée dans la première partie et l'élément de perforation de film est une tubulure (22) disposée autour de l'ouverture (26).

5. Dispositif selon l'une quelconque des revendications 1 à 4, **caractérisé en ce que** l'élément de perforation de film (22) peut être coulissé dans la première partie (20) entre une première position, dans laquelle il ne dépasse pas ou essentiellement pas de la surface de base (21), et une seconde position, dans laquelle il dépasse nettement de la surface de base (21).

6. Dispositif selon l'une quelconque des revendications 1 à 5, **caractérisé en ce qu'**un raccord (28) pour un conduit ou pour l'embout d'une seringue, notamment un connecteur Luer femelle, est disposé sur la partie (20) du dispositif ayant l'ouverture (26) sur le côté (27) opposé à la surface adhésive (21).

7. Dispositif selon l'une quelconque des revendications 1 à 6, **caractérisé en ce que** l'ouverture dans l'une des deux parties est fermée par une membrane perforable ou refermable.

8. Dispositif selon l'une quelconque des revendications 1 à 7, **caractérisé en ce que** les deux parties (20, 23) du dispositif sont reliées ensemble de manière articulée.
